(19) Europäisches Patentamt
European Patent Office
Office européen des brevets

(11) **EP 1 671 297 B1**

(12) **EUROPÄISCHE PATENTSCHRIFT**

(45) Veröffentlichungstag und Bekanntmachung des Hinweises auf die Patenterteilung:
**06.06.2007 Patentblatt 2007/23**

(21) Anmeldenummer: **04766695.3**

(22) Anmeldetag: **03.09.2004**

(51) Int Cl.:
***G08G 1/04*** *(2006.01)*

(86) Internationale Anmeldenummer:
**PCT/EP2004/052027**

(87) Internationale Veröffentlichungsnummer:
**WO 2005/034062 (14.04.2005 Gazette 2005/15)**

(54) **VERFAHREN ZUR BEWERTUNG UND ZEITLICHEN STABILISIERUNG VON KLASSIFIZIERUNGSERGEBNISSEN**

METHOD FOR THE EVALUATION AND TEMPORAL STABILIZATION OF CLASSIFICATION RESULTS

PROCEDE POUR EVALUER ET STABILISER DES RESULTATS DE CLASSIFICATION DANS LE TEMPS

(84) Benannte Vertragsstaaten:
**FR GB SE**

(30) Priorität: **02.10.2003 DE 10345948**

(43) Veröffentlichungstag der Anmeldung:
**21.06.2006 Patentblatt 2006/25**

(73) Patentinhaber: **ROBERT BOSCH GMBH**
**70442 Stuttgart (DE)**

(72) Erfinder:
• **STEPHAN, Simon**
  **31079 Sibbesse (DE)**
• **LINDNER, Sebastian**
  **30823 Garbsen (DE)**
• **VOELZ, Henning**
  **31141 Hildesheim (DE)**

(56) Entgegenhaltungen:
EP-A- 0 940 792          DE-A- 4 237 721
DE-C- 19 542 871         US-A- 4 604 738

EP 1 671 297 B1

**Beschreibung**

Stand der Technik

Die Erfindung geht aus von einem Verfahren und System zur Bewertung von Klassifizierungsergebnissen aus computerunterstützt ablaufenden Klassifizierungsverfahren, bei denen zu klassifizierende Objekte über einen Zeitraum hinweg sensorisch erfasst und wiederholt unter Einbeziehung von bestimmten Gütemaßen für eine Objektklasse klassifiziert werden. Dabei ist ein solches Gütemaß eine Maßzahl oder eine andere qualifizierende Angabe innerhalb eines vorgewählten Bereichs und besitzt Aussagekraft über die Sicherheit, dass das Objekt der jeweiligen Objektklasse und nicht einer anderen Objektklasse angehört.

In vielen Anwendungsgebieten werden heute Beobachtungen von Objekten ausgewertet, z.B. im Maschinensehen in industriellen Fertigungsprozessen, sicherheitstechnischen Anwendungen, in der Umfelderfassung von Fahrzeugen etc. Diese Beobachtungen werden von Messeinrichtungen geliefert, welche prinzipiell aus einem oder mehreren z.T. unterschiedlichen Sensoren bestehen können, z.B. Radar, Ultraschall, Video im sichtbaren und infraroten Bereich, Lidar, Laser, Range-Imager.

Eine Zielsetzung in der Verarbeitung von so gewonnenen Objektdaten ist die Klassifizierung. Unter Klassifizierung versteht man die Zuordnung von Objekten zu bestimmten Objektklassen. Eine Klasse dient der Beschreibung von mehreren Objekten, die aufgrund ähnlicher Merkmale als zusammengehörig betrachtet werden. Klassifizierungssysteme zur Zuweisung von Objekten zu Objektklassen werden beispielsweise in der industriellen Fertigung eingesetzt. Auch die Erfassung und Objektklassifizierung des Umfeldes eines Kraftfahrzeugs während der Fahrt verspricht großen Nutzen.

Die Klassifizierung nach bekannten Klassifizierungsverfahren hat den Nachteil, dass insbesondere bei Grenzfällen bezüglich der Zuordnung des erfassten Objekts zu einer Klasse ein erhöhtes Risiko der Fehlklassifizierung besteht. So existiert bei Grenzfällen die hohe Wahrscheinlichkeit, dass das Objekt bei einzelnen Klassifizierungsergebnissen der falschen Objektklasse zugeschrieben wird. Auch haben Ausreißer bei der Klassifizierung eines Objekts z.B. durch Messfehler eine negative Wirkung auf die Stabilität und Robustheit der derzeit bekannten Klassifizierungsverfahren.

Des Weiteren bieten einige Verfahren des Standes der Technik lediglich eine ja/nein-Klassifizierung des erfassten Objekts. Diese Ergebnisse sind für Situationen, die ein differenzierteres Klassifizierungsergebnis erfordern, wie beispielsweise bei der Abschätzung von Unfallgefahren für ein Kraftfahrzeug, noch unzureichend. Ein Grund dafür besteht darin, dass ein Objekt bei der zeitlich wiederholten Klassifizierung einmal dieser Klasse, und danach beim Verfolgen des Objektes wieder einer anderen Klasse zugeordnet wird, so dass bedingt durch diese Instabilität kein klar interpretierbares Ergebnis geliefert wird. Zusätzlich wäre also die Information wichtig, mit welcher Sicherheit das Objekt nicht auch zu einer der anderen Klassen gehören könnte.

Aus der DE 42 37 721 A1 ist ein Verfahren und eine Vorrichtung zur Identifikation von Verkehrsteilnehmern bekannt, wobei zunächst nur eine Vorerkennung getroffen wird, die durch ein Prüfkriterium bestätigt werden muss.

Vorteile der Erfindung

Mit den Maßnahmen der unabhängigen Ansprüche wird eine zeitliche Stabilisierung des Klassifizierungsergebnisses erreicht. Aus den Gütemaßen der Einzelmessungen wird erfindungsgemäß ein Konfidenzmaß berechnet, das im Allgemeinen über eine gewisse Anzahl von Zeitschritten k und entsprechende Einzelmessungen hinweg "integriert" wird. Eine sprunghaft große Veränderung der Konfidenzmaße je Objektkasse bezüglich einander folgender Zeitschritte wird damit vermieden, so dass einzelne Ausreißer bei der Klassifizierung herausgefiltert werden. Auch erfolgt eine Verfestigung / Abschwächung des Klassifizierungsergebnisses, wenn eine nachfolgende Klassifizierung das Ergebnis einer vorherigen bestätigt oder nicht bestätigt. Dabei wird unter Bestätigung eine zumindest in der Tendenz gleiche Zuordnung des Objekts zu der Klasse verstanden. So kann beispielsweise eine Klassifizierung bezüglich einer Objektklasse als am dritt besten geeignete Klasse unter zehn Klassen noch eine Bestätigung für eine vorherige Klassifizierung des Objekts zu dieser Klasse darstellen.

Durch das sich gemäß der Erfindung laufend wiederholende Verfahren stabilisiert sich das Klassifizierungsergebnis bei Grenzfällen auf die etwas wahrscheinlichere Objektklasse, so dass ein störendes Hin- und Herspringen des Klassifizierungsergebnisses unterdrückt wird und damit das Verfahren robust gegenüber solchen Störungen ist.

Des Weiteren wird durch das Ausnutzen der zeitlichen Information bei der vorliegenden Erfindung eine differenziertere Bewertung des Klassifizierungsergebnisses ermöglicht. Ein solches "endgültiges Klassifizierungsergebnis" aufgrund von zeitlicher Kontextinformation und in Abhängigkeit von durch viele Messungen angepassten Konfidenzmaßen kann ein wesentlich besseres Ergebnis liefern, als eine Klassifikation aufgrund von Einzelergebnissen.

In den Unteransprüchen sind vorteilhafte Ausgestaltungen, Weiterbildungen und Verbesserungen des jeweiligen Gegenstandes der Erfindung angegeben.

Eine vorteilhafte Weiterbildung des erfindungsgemäßen Verfahrens ist eine Abhängigkeit der Aufwertung und/ oder der Abwertung des jeweiligen Konfidenzmaßes von dessen absoluter Güte. Dabei wird unter der absoluten Güte des Konfidenzmaßes dessen Höhe verstanden. So kann beispielsweise bei einem hohen Konfidenzmaß eine Aufwertung entsprechend niedrig sein, damit nicht eine zu große Differenz zwischen den Konfidenzmaßen entsteht, weil sonst eine zu große Differenz eine an sich richtige Korrektur einer Fehlklassifikation behindern würde.

Dieses Problem wird auch in einer anderen Weiterbildung des Verfahrens, bei der der zulässige Wertebereich für die Konfidenzmaße begrenzt wird, gelöst.

Eine zusätzliche Verbesserung des erfindungsgemäßen Verfahrens stellt die wichtende Einbeziehung der absoluten Güte der jeweiligen Einzelergebnisse der Klassifizierung bezüglich der einzelnen Objektklassen in die Aufwertung und / oder die Abwertung des entsprechenden Konfidenzmaßes dar. Dadurch fließt in das Klassifizierungsergebnis die Verlässlichkeit der Einzelergebnisse pro Objektklasse mit ein. Dieses hat eine erhöhte Qualität der Klassifizierung zur Folge.

Ein weiterer vorteilhafter Verfahrensschritt ist der des bewertenden Analysierens der berechneten Konfidenzmaße zur Bestimmung eines endgültigen, detaillierten Klassifizierungsergebnisses. Auf diese Weise können differenziertere Aussagen über die Klassifizierung getroffen werden, wie etwa die Aussage, dass das Objekt schlecht in die Klasse A und sehr schlecht in alle anderen Klassen passt. Dies stellt eine Verbesserung der Aussage dar "Klasse A ist die am besten passende".

Weiter vorteilhaft ist einerseits eine Bewertung als Klassifizierung in eine übergeordnete Klasse bei einem Abwechseln der Klassifizierungsergebnisse zwischen ähnlichen Objektklassen (Beispiel: Ergebnis wechselt zwischen "kleiner Pkw" und "großer Pkw" - Endergebnis könnte die Oberklasse "Pkw" sein) und andererseits eine Bewertung als Abweisung der Klassifizierung, wenn die Klassifizierungsergebnisse zwischen unähnlichen Objektklassen zeitlich hin- und herspringen (Beispiel: Ergebnis wechselt zwischen "Lkw" und "Fussgänger" - Endergebnis könnte sein "Objekt lässt sich nicht zuverlässig klassifizieren").

Insbesondere kann das erfindungsgemäße Verfahren für die Bewertung der Klassifizierungsergebnisse eines Klassifizierungsverfahrens für Objekte aus dem Umfeld eines Fahrzeugs angewendet werden. Dieses kann durch ein computergestütztes Fahrzeuginformationssystem erfolgen, das die folgenden Einrichtungen enthält:

- Wirksame Verbindungen mit zugehörigen Schnittstellen zu Fahrzeugsensoreinrichtungen zur Erfassung von Objekten aus dem Umfeld des Fahrzeugs;
- Einen Steuerkreis zur Analyse und Klassifizierung der erfassten Objekte geeignet zur Durchführung des erfindungsgemäßen Verfahrens, sowie
- Wirksame Verbindungen mit zugehörigen Schnittstellen zu Aktuatoreinrichtungen am Fahrzeug.

Zeichnungen

Anhand der Zeichnungen werden Ausführungsbeispiele der Erfindung erläutert.

Es zeigen

Fig. 1 eine Blockdarstellung eines computergestützten Fahrzeuginformationssystems eingerichtet zur Durchführung einer Ausgestaltung des erfindungsgemäßen Verfahrens;

Fig. 2 ein Flussdiagramm für eine Ausgestaltung des erfindungsgemäßen Verfahrens; und

Fig. 3 eine Skizze einer Szene im Umfeld eines Fahrzeuges mit Ergebnissen einer Ausgestaltung des erfindungsgemäßen Verfahrens.

Beschreibung von Ausführungsbeispielen

In den Figuren bezeichnen gleiche Bezugszeichen gleiche oder funktionsgleiche Komponenten.

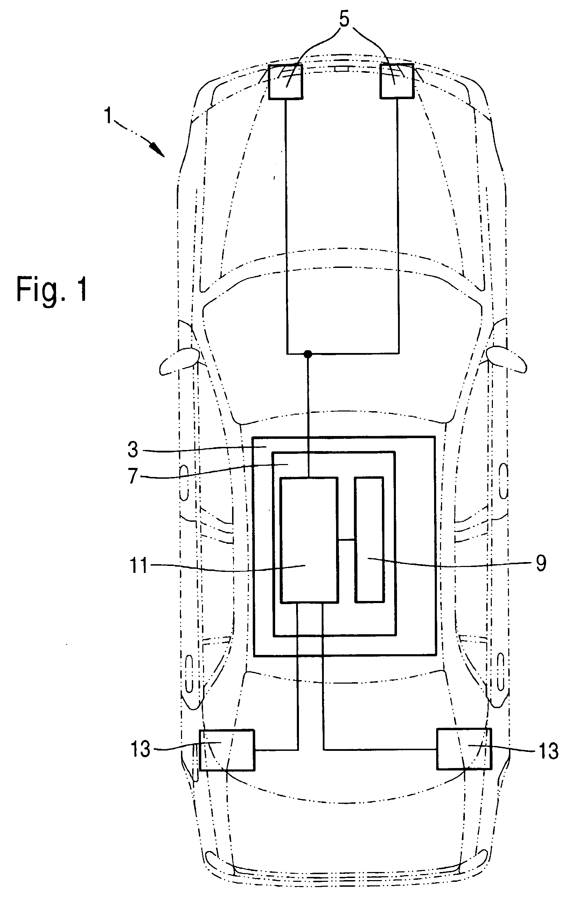

In und / oder an dem Fahrzeug 1, wie beispielsweise ein PKW, sind mit Bezug zu **Fig. 1** Sensoren 5 zur Erfassung von Objekten (z.B. Bäume, Fußgänger, Personenkraftwagen (PKW) oder Lastkraftwagen (LKW)) aus dem Umfeld des Fahrzeugs 1 angebracht. Die Art der Sensoren 5 kann beispielsweise Radar, Ultraschall, Video im sichtbaren und infraroten Bereich, Lidar, Laser und Range-Imager, oder sogenannte Entfernungsbildkamera sein. Die von den Sensoren ermittelten Messdaten über ein erfasstes Objekt werden über wirksame Verbindungen und Schnittstellen (z.B. Kabel, Funk, Infrarotübertragung) an das im Fahrzeug 1 integrierte Fahrzeuginformationssystem 3 weitergeleitet. Das Fahrzeuginformationssystem 3 besitzt eine Computereinheit 7, der eine Datenbank 9 zugeordnet ist, die Daten über die Merkmale bezüglich der Objektklassen wie z. B. Fußgänger, Transporter und PKW enthält.

Des Weiteren gehört zur Computereinheit 7 ein Steuerkreis 11 zur Klassifizierung der erfassten Objekte und Bewertung des Klassifizierungsergebnisses. In diesem Steuerkreis 11 werden sowohl die Messdaten von den Sensoren 5 als auch die aus der Datenbank 9 benötigten Daten zu den Merkmalen der Objektklassen eingespeist und darin für die Klassifizierung verarbeitet. Dabei werden erfindungsgemäß die Konfidenzmaße, die angeben, wie gut das erfasste Objekt zu der jeweiligen Objektklasse passt, je nach Bestätigung oder Nichtbestätigung der vorherigen Klassifizierung entsprechend auf- oder abgewertet, beispielsweise um drei Punkte pro Iteration erhöht oder bei der Abwertung um 3 Punkte erniedrigt.

Auch erfolgt gemäß der Erfindung in der Computereinheit 7 eine programmierte, bewertende Analyse des Klassifizierungsergebnisses. Dadurch wird eine differenzierte Klassifizierung erzielt, wie beispielsweise die Aussage, dass das Objekt sehr gut in die Klasse A und mittelmäßig in alle anderen Klassen passt.

Wenn das Klassifizierungsergebnis erfindungsgemäß eine ausreichende zeitliche Stabilität erreicht hat, können von der Steuereinheit 7 - falls gewollt - über wirksame Verbindungen (z.B. Kabel, Funk, Infrarotübertragung) bestimmte Aktuatoreinrichtungen 13 des Fahrzeugs 1 angesteuert, etwa die Bremse betätigt werden, wenn das Klassifizierungsergebnis beispielsweise im Zusammenhang mit einer Kollisionsvorhersage und einem Sicherheitssystem eingesetzt wird.

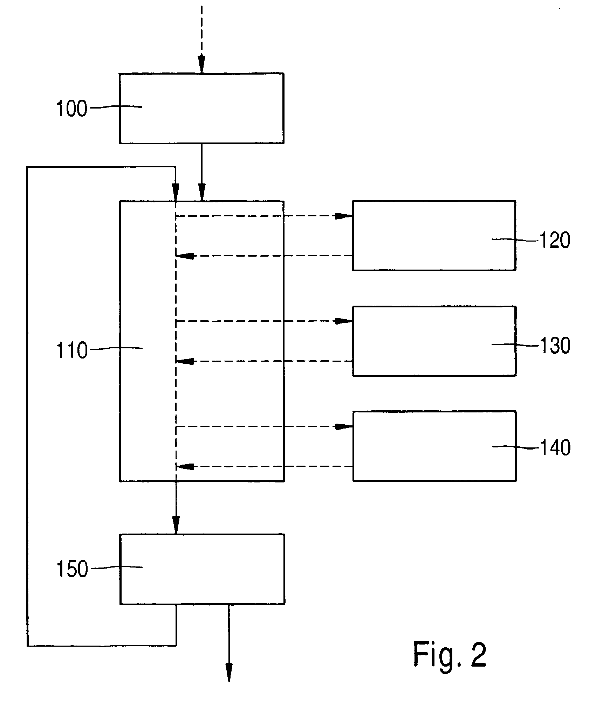

In **Figur 2** ist eine Ausgestaltung des erfindungsgemäßen Verfahrens als Flussdiagramm dargestellt.

Eine auf einer Einzelmessung mit den vorerwähnten Sensoren und einer Einzelinterpretation der sich ergebenden Messergebnisse beruhende Vorklassifizierung 100, die noch keine zeitliche Stabilisierung enthält und noch kein Konfidenzmaß im Sinne dieser Anmeldung darstellt, liefert für jedes zu untersuchende Objekt Maßzahlen als "Gütemaß" im vorerwähnten Sinn für die Übereinstimmung mit allen zu unterscheidenden Klassen. Motiviert aus der Informationstheorie wird in diesem Beispiel als Maß eine so genannte Wortlänge verwendet, die bei einer guten Übereinstimmung von Objekt und Objektklasse klein werden soll. Im folgenden ist diese "Klassifizierungswortlänge" mit "$w\_i$" bezeichnet, wobei i als Index für eine Klasse steht.

Als mögliche Erweiterung kann zusätzlich zu den Klassifizierungswortlängen $w\_i$ eine "Rückweisungswortlänge" $w\_rej\_i$ berechnet werden. Dieses Maß bezieht sich auf die Frage, ob das Objekt mit der jeweiligen Objektklasse NICHT übereinstimmt und zurückzuweisen ist. Die Berechnung von $w\_rej\_i$ kann prinzipiell anders erfolgen als die von $w\_i$. Beide Ergebnisse der Vorklassifizierung, $w\_i$ und $w\_rej\_i$, oder aber nur eines von beiden, werden in diesem Beispiel als Eingangsgrößen des erfindungsgemäßen Verfahrens verwendet, das vorerwähnte "Gütemaß" dient also zur Berechnung des eigentlichen Konfidenzmaßes, wie nachfolgend näher beschrieben wird.

Für das zu klassifizierende Objekt gibt es für jede der zu unterscheidenden Objektklassen eine sogenannte Hypothese. Hypothese i lautet: "das Objekt gehört zu Klasse i".

Zur Bewertung der Wahrscheinlichkeit für das Zutreffen einer Hypothese steht das Konfidenzmaß **"conf\_i".** Das erfindungsgemäße Verfahren benutzt diese Konfidenzmaße zur Bewertung aller Klassifizierungswortlängen.

Zusätzlich zu den oben genannten Eingangsdaten verwendet das Bewertungssystem erfindungsgemäß die Konfidenzmaße aus vergangenen Zeitschritten (k-1) "conf\_i\_k-1" für jede der einzelnen Hypothesen.

Innerhalb des Verarbeitungsschrittes 110 der Anpassung der Konfidenzmaße erfolgt eine Unterscheidung 120 nach bestimmten Fällen. Die Behandlung dieser Fälle kann je nach Anwendung unterschiedlich sein, d.h. das System ist prinzipiell auch ohne Fallunterscheidung bzw. mit weniger oder auch mehr Unterscheidungen einsetzbar. In diesem Beispiel werden die folgenden 3 Fälle unterschieden:

a) Das Objekt wurde im aktuellen Zeitschritt klassifiziert und nicht zurückgewiesen.
b) Das Objekt wurde im aktuellen Zeitschritt vom Klassifizierer als zu keiner der Objektklassen zugehörig eingestuft und somit zurückgewiesen. Dies kann beispielsweise durch den Vergleich der Rückweisungswortlängen $w\_rej\_i$ für alle Klassen mit einer festgelegten Rückweisungsschwelle erfolgen.
c) Für das Objekt liegen im aktuellen Zeitschritt keine Klassifizierungswortlängen ($w\_i$ und/oder $w\_rej\_i$) vor. Dies kann auf unzureichende Eingangsdaten des Klassifizierers zurückzuführen sein, oder aber auch eine bewusste Nichtbearbeitung des Objektes zum Grund haben. Beispielsweise kann es mit dem Ziel einer hohen Verarbeitungsgeschwindigkeit sinnvoll sein, ein Objekt mit einem bereits hohen Konfidenzmaß im aktuellen Zeitschritt nicht erneut zu klassifizieren, sondern die Klassifizierung nur aufgrund der alten Konfidenzmaße durchzuführen.

Zu Fall a), das Objekt wurde im aktuellen Zeitschritt klassifiziert:

Gemäß der Klassifizierungswortlängen $w\_i$ muss eine Aufwertung des entsprechenden Konfidenzmaßes erfolgen. Eine Möglichkeit stellt die Aufwertung nach einer Sortierung der Güte der einzelnen Hypothesen dar: Sämtliche Wortlängen $w\_i$ werden aufsteigend sortiert, das kleinste $w\_i$ bezeichnet damit die "am besten übereinstimmende" Klasse für das Objekt. Gemäß dieser Rangliste werden die Konfidenzmaße für jede Hypothese aufgewertet. Ein Schema kann wie folgt aussehen:

- Konfidenzmaß für die Klasse auf Platz 1 der Liste wird um 5 Punkte aufgewertet;
- Konfidenzmaß für die Klasse auf Platz 2 der Liste wird um 3 Punkte aufgewertet;
- Konfidenzmaß für die Klasse auf Platz 3 der Liste wird um 1 Punkt aufgewertet;
- Alle weiteren Konfidenzmaße bleiben unverändert.

Die Zahl der berücksichtigten Klassen und die Relation der Aufwertungen ist dabei nach Anwendungsfall frei wählbar.

Zusätzlich wird die Aufwertung in Abhängigkeit von der absoluten Güte des Einzelergebnisses vorgenommen. Hierbei wird für jede Klasse ein zusätzlicher Gewichtungsfaktor g_i berechnet, siehe Schritt 130. Dieser berücksichtigt die Güte des Ergebnisses je Klasse (also die Höhe von w_i in Relation zu einer bestimmten Schwelle). Als Beispiel kann hier der Abstand von w_rej_i zur Rückweisungsschwelle verwendet werden: dieser Abstand ist ein Maß für die Bewertung "das Objekt gehört keiner der Klassen an".

$$ g\_i \ = \ \max\left( 0 \ ; \ 1 - \frac{w\_rej\_i}{R\ddot{u}ckweisungsschwelle} \right) $$

Für Objekte, die zwar klassifiziert, aber beinahe schon zurückgewiesen wurden, nimmt der Gewichtungsfaktor einen Wert nahe 0 an. Dies bedeutet, dass die entsprechende Hypothese eigentlich kaum noch bestätigt wird und daher eine Aufwertung des Konfidenzmaßes nicht plausibel ist. Für ein Ergebnis höherer Güte - dies entspricht einem größeren Abstand zur Rückweisungsschwelle - strebt g_i gegen 1. Dies gilt für die Annahme von positiven w_rej_i. Das Ergebnis für die Aufwertung der Konfidenzmaße lautet dann: 5*g_i für die Klasse auf Platz 1 und 3*g_i, bzw. 1*g_i entsprechend für Platz 2 und 3.

Zu Fall b), das Objekt wurde im aktuellen Zeitschritt vom Klassifizierer "zurückgewiesen":

Im Fall der Rückweisung werden die Konfidenzmaße aller Hypothesen abgewertet: Eine Rückweisung des Objektes bedeutet, dass das Objekt keiner der gegebenen Klassen zugeordnet werden kann, somit wird keine der gegebenen Hypothesen unterstützt.

Im Zusammenhang mit dem unter Fall a) genannten Zahlenbeispiel einer Aufwertung von 5:3:1, kann für Fall b beispielsweise eine Abwertung aller Konfidenzmaße um 4 erfolgen.

Wie auch in Fall a) wird für die Abwertung der Konfidenzmaße ein güteabhängiger zusätzlicher Gewichtungsfaktor g2_i für jede Klasse i verwendet 130. Dieser kann sich beispielsweise wieder nach dem Abstand der Rückweisungswortlänge w_rej_i von einer gegebenen Rückweisungsschwelle richten:

$$ g2\_i \ = \ \min\left( 1 \ ; \ \left| 1 - \frac{w\_rej\_i}{R\ddot{u}ckweisungsschwelle} \right| \right) $$

In diesem Fall nimmt g2_i große Werte (maximal 1) für einen großen Abstand zur Rückweisungsschwelle an: Je eindeutiger das Objekt zurückgewiesen wurde, desto stärker muss das Konfidenzmaß abgewertet werden. Für w_rej_i nahe der Rückweisungsschwelle strebt der Gewichtungsfaktor g2_i gegen 0 (keine Abwertung).

Zu Fall c), für das Objekt liegt im aktuellen Zeitschritt kein Klassifizierungsergebnis vor:

Im Fall des Fehlens von Klassifizierungswortlängen (w_i und/oder w_rej_i) werden sämtliche Konfidenzmaße um einen bestimmten gleichen Betrag abgewertet. Dies steht für eine Verringerung der Sicherheit in Bezug auf die Richtigkeit der Hypothesen. Für das herangezogene Zahlenbeispiel ist eine Abwertung aller Konfidenzmaße um 1 gewählt. Dabei ist klar, dass die absoluten Zahlen passend zur Iterationsrate der Klassifizierung, passend zu Wertebereichsgrenzen und passend zur Anwendung des Verfahrens gesetzt werden sollten. Die Iterationsrate ist dabei die Häufigkeit, mit der pro vorgegebener Zeiteinheit in den oben genannten Zeitschritten k einzelne Gütemaße berechnet werden.

Auch hier ist eine differenziertere Abwertung in Abhängigkeit unterschiedlicher Fälle (z.B. gemäß einer Fragestellung "warum wurde das Objekt nicht klassifiziert?", etc.) vorteilhaft anwendbar.

Anpassung des Wertebereiches, siehe Schritt 140:

Eine Anpassung 140 des Wertebereiches der Konfidenzmaße erfolgt durch dessen Begrenzung. Auch hierbei ist klar, dass die absoluten Zahlen passend zur Iterationsrate der Klassifizierung und passend zur Anwendung des Verfahrens gesetzt werden sollten.

Der Wertebereich muss nicht zwangsläufig symmetrisch um Null sein, ein kleineres Intervall für negative Konfidenzmaße und ein größeres für positive kann sich je nach Anwendung als zweckmäßig erweisen. In diesem Beispiel wird ein Bereich von -20 bis 200 gewählt.

Fallen die Konfidenzmaße in Folge einer Auf-/Abwertung aus diesem Wertebereich, ist eine Anpassung erforderlich, da eine Klassifizierung sonst nicht mehr möglich ist, da alle oder zumindest mehrere Hypothesen gleichermaßen unterstützt würden. Diese kann für einen Unterlauf und Überlauf des Wertebereiches unterschiedlich erfolgen. Eine mögliche Anpassung ist:

- bei Unterlauf des Wertebereiches werden die Konfidenzwerte abgeschnitten. Droht ein Konfidenzmaß unter diese Marke zu fallen, wird es auf den minimal möglichen Wert gesetzt.
- Bei Überlauf des Wertebereiches werden die Konfidenzmaße nicht einfach abgeschnitten, sondern entsprechend ihrer Relation zueinander angepasst: Beispielweise ist bei Erreichen des Maximalwertes bei einem Konfidenzmaß eine Abwertung aller anderen Konfidenzmaße um jenen Wert durchführbar, um den das hohe Konfidenzmaß normalerweise aufgewertet worden wäre. Somit bleibt der Abstand der hohen Konfidenzmaße im Vergleich zu den anderen Konfidenzmaßen erhalten.

Die genannte Anpassung ist hier nur ein Beispiel für die Vielzahl möglicher Vorgehensweisen.

Bestimmung des endgültigen Klassifizierungsergebnisses, Schritt 150:

Als letzter Bearbeitungsschritt des Verfahrens gemäß Ausführungsbeispiel erfolgt erfindungsgemäß die Bestimmung 150 des Klassifizierungsergebnisses für das betrachtete Objekt. Dieses Ergebnis wird auf Grundlage der berechneten Konfidenzmaße ermittelt.

Hier existieren sehr viele Möglichkeiten der detaillierten Auswertung, wie zum Beispiel:

- weise das Objekt derjenigen Klasse zu, für die das höchste Konfidenzmaß vorliegt.
- Zusätzlich alternativ: das Klassifizierungsergebnis ist nur dann gültig, wenn dieses höchste Konfidenzmaß eine gegebene Mindestschwelle überschreitet.
- Zusätzlich alternativ: das Klassifizierungsergebnis ist nur dann gültig, wenn der Abstand dieses höchsten Konfidenzmaßes zum zweithöchsten Konfidenzmaß eine vorgegebene Schwelle überschreitet (andernfalls: kennzeichne das Ergebnis als "nicht eindeutig")

Zur erfindungsgemäßen zeitlichen Stabilisierung werden die Konfidenzmaße zwischengespeichert und als Eingangsdaten für den nächsten Bearbeitungsschritt des Verfahrens verwendet.

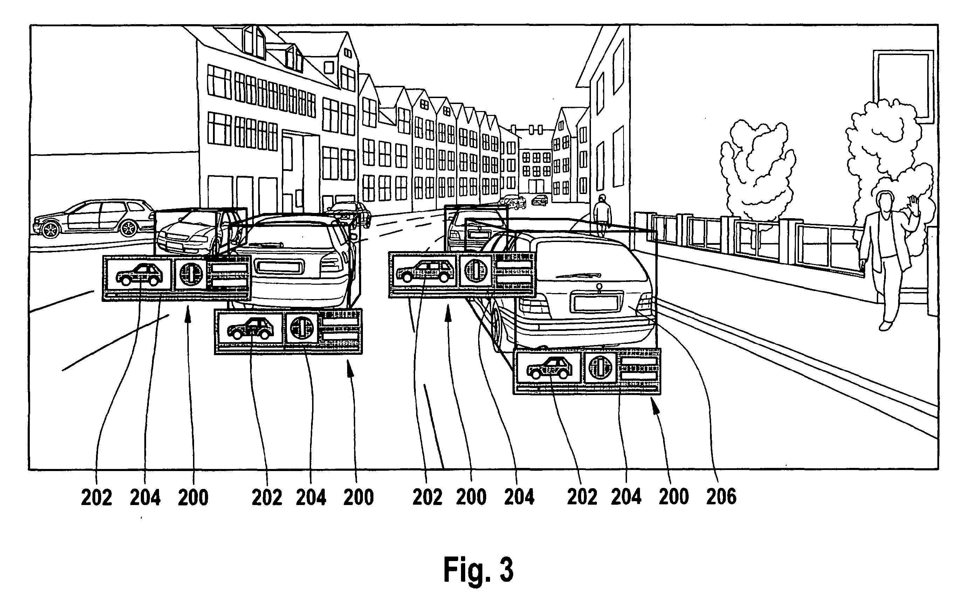

**Figur 3** zeigt eine Darstellung einer Szene im Umfeld eines Fahrzeuges mit Ergebnissen einer Ausgestaltung des erfindungsgemäßen Verfahrens. Dabei wird für jedes der in der dargestellten Szene vorkommenden Objekte (hier nur Fahrzeuge), von denen eines mit Bezugszeichen 206 gekennzeichnet ist, in Icons 200 die Klasse des Objekts durch ein Symbol 202 eingeblendet und mit einem Balken 204 die Höhe der Konfidenzmaße angezeigt. Eine solche Darstellung ist nicht für den Fahrer bestimmt, sondern dient nur der weiteren Erläuterung der vorliegenden Erfindung.

Obwohl die vorliegende Erfindung anhand eines bevorzugten Ausführungsbeispiels vorstehend beschrieben wurde, ist sie darauf nicht beschränkt, sondern auf vielfältige Weise modifizierbar, etwa die absolute Größe der Auf- / Abwertungs-Deltazahlen, die zeitliche Iterationsdauer, oder die Grenzen.

Das erfindungsgemäße Verfahren lässt sich zur Verbesserung jeder Art von Klassifizierung verwenden. Das Verfahren besteht aus mehreren, größtenteils voneinander unabhängigen Schritten und varianten und kann flexibel aufgebaut werden.

Schließlich können die Merkmale der Unteransprüche im wesentlichen frei miteinander und nicht durch die in den Ansprüchen vorliegende Reihenfolge miteinander kombiniert werden, sofern sie unabhängig voneinander sind.

**Patentansprüche**

1. Verfahren zur Bewertung und zeitlichen Stabilisierung von Klassifizierungsergebnissen aus computerunterstützt ablaufenden Klassifizierungsverfahren (100), bei denen zu klassifizierende Objekte (206) über einen Zeitraum hinweg sensorisch erfasst und wiederholt unter Einbeziehung von Gütemaßen je Objektklasse klassifiziert werden, mit dem Schritt,

a) Aufwerten (110, 120) eines aus den Gütemaßen berechneten Konfidenzmaßes, wenn eine nachfolgende Klassifizierung das Ergebnis einer vorherigen Klassifizierung bestätigt, **gekennzeichnet durch** die weiteren Schritte,

b) Abwerten (110, 120) des Konfidenzmaßes, wenn eine nachfolgende Klassifizierung das Ergebnis einer vorherigen Klassifizierung nicht bestätigt,

c) Erzeugen (150) eines endgültigen Klassifizierungsergebnisses unter Einbeziehung der auf- oder abgewerteten Konfidenzmaße.

**2.** Verfahren nach Anspruch 1, bei dem die Aufwertung (110, 120) und / oder Abwertung (110, 120) in Abhängigkeit von der absoluten Güte des Konfidenzmaßes vorgenommen wird.

**3.** Verfahren nach Anspruch 1, bei dem die absolute Güte der jeweiligen Einzelergebnisse der Klassifizierung (100) bezüglich der einzelnen Objektklassen wichtend in die Aufwertung (110, 120) und / oder Abwertung (110, 120) der jeweiligen Konfidenzmaße einbezogen wird.

**4.** Verfahren nach Anspruch 1, bei dem der zulässige Wertebereich für die auf- oder abgewerteten Konfidenzmaße begrenzt ist (140).

**5.** Verfahren nach einem der Ansprüche 1 bis 4, enthaltend den zusätzlichen Schritt des bewertenden Analysierens der berechneten Konfidenzmaße zur Bestimmung (150) eines endgültigen, detaillierten Klassifizierungsergebnisses.

**6.** Verfahren nach Anspruch 5, bei dem ein Abwechseln der Klassifizierungsergebnisse zwischen bestimmten Objektklassen als Klassifizierung (150) in eine diesen Objektklassen übergeordnete Klasse bewertet wird.

**7.** Verfahren nach Anspruch 5, bei dem ein Abwechseln der Klassifizierungsergebnisse zwischen unähnlichen Objektklassen als Rückweisung einer Klassifizierung des Objekts (206) bewertet wird.

**8.** Verfahren nach einem der Ansprüche 1 bis 7, bei dem Klassifizierungsergebnisse eines Klassifizierungsverfahrens (100) für Objekte aus dem Umfeld eines Fahrzeugs (1) bewertet werden.

**9.** Computergestütztes Fahrzeuginformationssystem (3) enthaltend Verbindungsschnittstellen zu Fahrzeugsensoreinrichtungen (5) zur Erfassung von Objekten (206) aus dem Umfeld des Fahrzeugs (1), und einen Steuerkreis (11) zur Analyse und Klassifizierung der erfassten Objekte (206), eingerichtet zur Durchführung eines der Verfahren nach Anspruch 8.

**10.** Fahrzeuginformationssystem (3) nach dem vorstehenden Anspruch, enthaltend Verbindungsschnittstellen zu Aktuatoreinrichtungen (13) am Fahrzeug (1).

**Claims**

**1.** Method for the evaluation and temporal stabilization of classification results from classification methods (100) which are executed with computer support and in which objects (206) which are to be classified are registered by sensors over a period of time and are repeatedly classified taking into account quality measures per object class, having the step

a) increasing the value (110, 120) of a confidence measure calculated from the quality measures if a subsequent classification confirms the result of a previous classification, **characterized by** the further steps,

b) decreasing the value (110, 120) of the confidence measure if subsequent classification does not confirm the result of a previous classification, and

c) generation (150) of a final classification result including the confidence measures which are increased or decreased in value.

**2.** Method according to Claim 1, in which the increase in value (110, 120) and/or decrease in value (110, 120) are carried out as a function of the absolute quality of the confidence measure.

**3.** Method according to Claim 1, in which the absolute quality of the respective individual results of the classification (100) with respect to the individual object classes is included in a weighting fashion in the increase in value (110, 120) and/or decrease in value (110, 120) of the respective confidence measures.

4. Method according to Claim 1, in which the permissible value range for the confidence measures which can be increased or decreased in value is limited (140).

5. Method according to one of Claims 1 to 4, containing the additional step of the evaluating analysis of the calculated confidence measures for determining (150) an ultimate, detailed classification result.

6. Method according to Claim 5, in which changing over classification results between specific object classes is evaluated as classifying (150) in a class which is superordinate to these object classes.

7. Method according to Claim 5, in which changing over the classification results between non-similar object classes is evaluated as rejection of a classification of the object (206).

8. Method according to one of Claims 1 to 7, in which classification results of a classification method (100) are evaluated for objects from the surroundings of a vehicle (1).

9. Computer-supported vehicle information system (3) containing connection interfaces to vehicle sensor devices (5) for registering objects (206) from the surroundings of the vehicle (1), and a control circuit (11) for analyzing and classifying the registered objects (206), configured to carry out one of the methods according to Claim 8.

10. Vehicle information system (3) according to the above claim, containing connection interfaces to actuator devices (13) on the vehicle (1).

**Revendications**

1. Procédé d'évaluation et de stabilisation dans le temps de résultats de classification issus de procédés de classification (100) exécutés de façon assistée par ordinateur dans lesquels des objets à classifier (206) sont détectés pendant une certaine période par des capteurs et classifiés plusieurs fois en intégrant des valeurs de qualité par classe d'objet, comprenant l'étape suivante :

a) revalorisation (110, 120) d'une valeur de confiance calculée à partir des valeurs de qualité si une classification suivante confirme le résultat d'une classification précédente,
**caractérisé par**
les autres étapes:
b) dévalorisation (110, 120) de la valeur de confiance si une classification suivante ne confirme pas le résultat d'une classification précédente,
c) génération (150) d'un résultat de classification définitif en intégrant les valeurs de confiance revalorisées ou dévalorisées.

2. Procédé selon la revendication 1,
**caractérisé en ce que**
la revalorisation (110, 120) et/ ou la dévalorisation (110, 120) est effectuée en fonction de la qualité absolue de la valeur de confiance.

3. Procédé selon la revendication 1,
**caractérisé en ce que**
la qualité absolue des résultats individuels respectifs de la classification (100) concernant les différentes classes d'objets est intégrée dans la revalorisation (110, 120) et/ou la dévalorisation (110, 120) pour pondérer les valeurs de confiance respectives.

4. Procédé selon la revendication 1,
**caractérisé en ce que**
la plage de valeurs admissible pour les valeurs de confiance revalorisées ou dévalorisées est limitée (140).

5. Procédé selon l'une quelconque des revendications 1 à 4,
comprenant l'étape supplémentaire de l'analyse d'évaluation des valeurs de confiance calculées pour déterminer (150) un résultat de classification détaillé définitif.

**6.** Procédé selon la revendication 5,
   **caractérisé en ce que**
   une alternance des résultats de classification entre des classes d'objets déterminées est évaluée comme une classification (150) dans une classe au-dessus de ces classes d'objets.

**7.** Procédé selon la revendication 5,
   **caractérisé en ce que**
   une alternance des résultats de classification entre des classes d'objets non similaires est évaluée comme un refus d'une classification de l'objet (206).

**8.** Procédé selon l'une quelconque des revendications 1 à 7,
   **caractérisé en ce que**
   des résultats de classification d'un procédé de classification (100) sont évalués pour des objets situés dans l'environnement d'un véhicule (1).

**9.** Système d'information de véhicule assisté par ordinateur (3), comprenant des interfaces de liaison vers des capteurs de véhicule (5) pour détecter des objets (206) dans l'environnement du véhicule (1), et un circuit de commande (11) pour analyser et classifier les objets (206) détectés, installé pour exécuter l'un des procédés selon la revendication 8.

**10.** Système d'information de véhicule (3) selon la revendication précédente, comprenant des interfaces de liaison vers des actionneurs (13) installés sur le véhicule (1).

Fig. 1

Fig. 2

202 204 200 202 204 200 202 200 204 202 204 200 206

Fig. 3

EP 1 671 297 B1